**Europäisches Patentamt**

**European Patent Office**

**Office européen des brevets**

(19)

(11) Veröffentlichungsnummer: **0 066 720**
A1

# EUROPÄISCHE PATENTANMELDUNG

(12)

(21) Anmeldenummer: 82104024.3

(22) Anmeldetag: 08.05.82

(51) Int. Cl.³: **B 65 G 47/51**, B 67 C 7/00

(30) Priorität: 06.06.81 DE 3122608

(43) Veröffentlichungstag der Anmeldung: 15.12.82
Patentblatt 82/50

(84) Benannte Vertragsstaaten: BE DE FR IT NL SE

(71) Anmelder: Holstein & Kappert GmbH, Juchostrasse 20,
D-4600 Dortmund 1 (DE)

(72) Erfinder: Borstelmann, Wolfgang, Dipl.-Ing., Genfer
Weg 14, D-4600 Dortmund 41 (DE)
Erfinder: Bargelé, Norbert, Dr., Flachskamp 47,
D-4670 Lünen-Alstedde (DE)
Erfinder: Kautz, Ralf-Dieter, Dipl.-Ing.,
Heinrich-König-Strasse 4, D-4630 Bochum (DE)

(54) Verfahren zum Bereitstellen von Flaschen oder dgl.

(57) Bei einem Verfahren zum Bereitstellen von Flaschen od. dgl. für eine Flaschenbehandlungsanlage werden erfindungsgemäß die Flaschen bei Nichtvorhandensein eines Pulks vor der eigentlichen Behandlungsmaschine mit hoher Geschwindigkeit im wesentlichen drucklos zugeführt, zur Bildung eines Pulks mehrspurig aufgestaut und dieser Pulk auf eine der jeweiligen Entnahmeleistung der Behandlungsmaschine angepaßte Fördergeschwindigkeit eingestellt, wobei der jeweilige Pulk bzw. ein Bereich des Pulks mit einer der Befüll- und/oder Entnahmegeschwindigkeit angepaßten mittleren Geschwindigkeit bewegt wird, derart, daß in allen Bereitstellungsphasen Geschwindigkeitsverhältnisse $V_F$ (Flasche) = $V_B$ (Band) vorliegen.

Mit diesem Verfahren sollen Stör- bzw. Änderungsfaktoren innerhalb eines Förderabschnittes sowie der dazugeordneten Behandlungsmaschinen unmittelbar erfaßt und anderseits eine Flaschenbereitstellung gesichert sein, ohne daß im jeweiligen Zuförderabschnitt wesentliche Impulsgeräusche infolge aufeinandertreffender Gruppen von Gefäßen oder Einzelgefäßen auftreten. Gleichzeitig soll eine mechanische Trennung der Funktionen Transportieren und Puffern erzielt werden.

- 1 -

Verfahren zum Bereitstellen von Flaschen oder dgl.

Die Erfindung bezieht sich auf ein Verfahren zum Bereitstellen von Flaschen oder dgl. für eine Flaschenbehandlungsanlage.

Bei derartigen Flaschenbehandlungsanlagen werden die Flaschen aus ihren Transportbehältern wie Kästen und dgl. entladen und dem im wesentlichen gemeinsamen Transportweg zu den einzelnen Behandlungsstationen zugegeben und innerhalb eines Förderabschnittes zwischen zwei Behandlungsstationen entsprechend der Durchsatzleistung der jeweils nachgeschalteten Behandlungsstation in einem vorbestimmbaren Umfang aufgestaut und ständig entnommen. Es ist bekannt, bei derartigen Flaschenbehandlungskolonnen eine automatische Laufregelung vorzunehmen. Dabei wird innerhalb eines aus Einzelauslaufförderer, Pufferstrecke und Einzelzulaufförderer bestehenden Förderabschnittes zwischen zwei Behandlungsmaschinen die in der Pufferstrecke vorhandene Anzahl von Gefäßen ermittelt und als Steuergröße für die Transportgeschwindigkeit des Förderabschnittes bzw. die Durchsatzleistung

- 2 -

0066720

einer Maschine zugrunde gelegt. Diese Art der Steuerung hat den Nachteil, daß nur das Geschehen innerhalb eines betreffenden Förderabschnittes einen Einfluß auf die Steuergröße hat. Die Verminderung der Durchsatzleistung einer im Förderabschnitt nachgeschalteten Behandlungsmaschine, beispielsweise hervorgerufen durch Flaschenbruch, Aussortierung fehlerhafter Gefäße und dgl., wird dabei nicht berücksichtigt.

Andererseits entspricht die gemeinsame Geschwindigkeitsvorgabe eines aus Zulauftisch und Pufferzone bestehenden Förderabschnittes nicht den hinsichtlich der gewünschten Lärmreduzierung notwendigen Voraussetzungen. Die mit zwar angepaßter, aber gleicher Geschwindigkeit fortbewegten Gefäße stoßen insbesondere am hinteren Ende des Pulks auf die jeweils aufgestauten Gefäße und verursachen spätestens in diesem Bereich die zu vermindernden Aufprallgeräusche. Diese können auch bei einer der Durchsatzleistung einer nachgeschalteten Behandlungsstation jeweils angepaßten und relativ gleichmäßigen Geschwindigkeit nicht aufgefangen werden.

Ein weiterer Nachteil eines derartigen Steuerungssystems besteht darin, daß aufgrund unterschiedlicher Geschwindigkeiten bei der Einzelförderung und anschließenden Pulkförderung nur relativ geringe Unterschiede in der eigentlichen Förderspurbreite möglich sind. Um aber dennoch eine ausreichende Anzahl von Flaschen aufstauen bzw. zur Verfügung halten zu können, müssen derartige Abschnitte relativ lang sein, wodurch die gesamte Anlage entsprechend großflächig ausgelegt sein muß.

Die Erfindung hat sich deshalb die Aufgabe gestellt, ein Verfahren zum Bereitstellen von Flaschen oder dgl. für eine Flaschenbehandlungsanlage zu schaffen, welches einerseits die Stör- bzw. Änderungsfaktoren innerhalb eines Förderabschnittes und der zugeordneten Behandlungsmaschinen unmittelbar erfaßt und andererseits eine Flaschenbereitstellung sichert, ohne daß im jeweiligen Zuförderabschnitt wesentliche Impulsgeräusche infolge aufeinandertreffender Gruppen von Gefäßen oder Einzelgefäße auftreten. Dabei soll eine mechanische Trennung der Funktionen Transportieren und Puffern erreicht werden.

Diese Aufgabe wird gemäß der Erfindung bei einem Verfahren der eingangs genannten Art dadurch gelöst, daß die Flaschen bei Nichtvorhandensein eines Pulkes vor der eigentlichen Behandlungsmaschine mit hoher Geschwindigkeit im wesentlichen drucklos zugeführt, zur Bildung eines Pulkes mehrspurig aufgestaut und dieser Pulk auf eine der jeweiligen Entnahmeleistung der Behandlungsmaschine angepaßte Fördergeschwindigkeit eingestellt wird, wobei der jeweilige Pulk bzw. ein Bereich des Pulks mit einer der Befüll- und/oder Entnahmegeschwindigkeit angepaßten mittleren Geschwindigkeit bewegt wird, derart, daß in allen Bereitstellungsphasen im wesentlichen Geschwindigkeitsverhältnisse
$V_F$ (Flasche)= $V_B$ (Band) vorliegen.

Dabei hat es sich als zweckmäßig erwiesen, daß zur
Ermittlung der jeweiligen Aufholdurchsatzleistung die
Summe aller im Pulk vor und/oder hinter der jeweiligen
Behandlungsmaschine gepufferten Flaschen herangezogen
wird.

Im Rahmen der Erfindung wird ferner vorgeschlagen, daß
die Flaschen bei Vorhandensein eines vorgegebenen Puffers
bzw. eines Pulks diesem mit verminderter Leistung zugeführt werden.

Erfindungsgemäß ist die Zuführungsgeschwindigkeit der
nachzuführenden Flaschen in Abhängigkeit von der Pulklänge vor und/oder hinter der Behandlungsmaschine einregelbar.

Das zur Durchführung des erfindungsgemäßen Verfahrens
geeignete Bereitstellungsaggregat für Flaschenbehandlungsmaschinen besteht aus einer Anzahl nebeneinander
befindlicher Transportbänder oder dgl., die mit oberhalb der Transportebene verlaufenden Abweiselementen

0066720

ausgestattet sind und einen Antrieb aufweisen. Dieses Behandlungsaggregat zeichnet sich erfindungsgemäß dadurch aus, daß das Bereitstellungsaggregat aus einer durchgehenden Schnellspurstrecke und mindestens einem daneben befindlichen, mit an die Abnahmeleistung der folgenden Behandlungsstation angepaßter Geschwindigkeit antreibbaren Speicherabschnitt besteht, wobei dieser Abschnitt vorzugsweise nochmals in Transportrichtung ein- oder mehrmals unterteilt und die so gebildeten Abschnitte mit aufeinander abstimmbaren Geschwindigkeiten antreibbar sind und dabei im wesentlichen Geschwindigkeitsverhältnisse $V_F$ (Flasche) = $V_B$ (Band) vorliegen.

Zur Erreichung einer Feinabstufung ist die Schnellspurstrecke in ihrer Transportgeschwindigkeit erfindungsgemäß entsprechend der Durchsatzleistung der nachgeschalteten Behandlungsmaschine unabhängig von der Geschwindigkeit des Speicherabschnittes regelbar.

Zur Vermeidung von Aufprallimpulsen bei noch nicht verminderter Durchsatzleistung des Schnellspurförderers empfiehlt es sich, daß die eigentliche Schnellspurstrecke entsprechend der Anzahl der zugeordneten Speicherabschnitte mit je nach Besetzungsart dieser Speicherabschnitte einlenkbaren Abweiselementen ausgestattet ist, derart, daß die auf der Schnellspurstrecke mit erhöhter Transportgeschwindigkeit bewegbaren Flaschen dem Pulkende mit geringer Differenzgeschwindigkeit nachführbar sind.

Mit der erfindungsgemäß vorgeschlagenen Ausgestaltung
werden die Nachteile, wie sie bei dem bekannten Verfahren auftreten, vermieden. Es kann eine mechanische
Trennung der Funktionen Transportieren und Puffern
erreicht werden, so daß die schnellaufenden Bänder
im wesentlichen durchgehend und ohne Überschubfläche
ausgeführt werden können. Ferner ergibt sich aus der
vorgeschlagenen Lösung, daß in Bereichen, in denen
sich das jeweilige Pulkende befindet, der schiebende Effekt der sonst schnellaufenden Transporteure
reduziert wird.

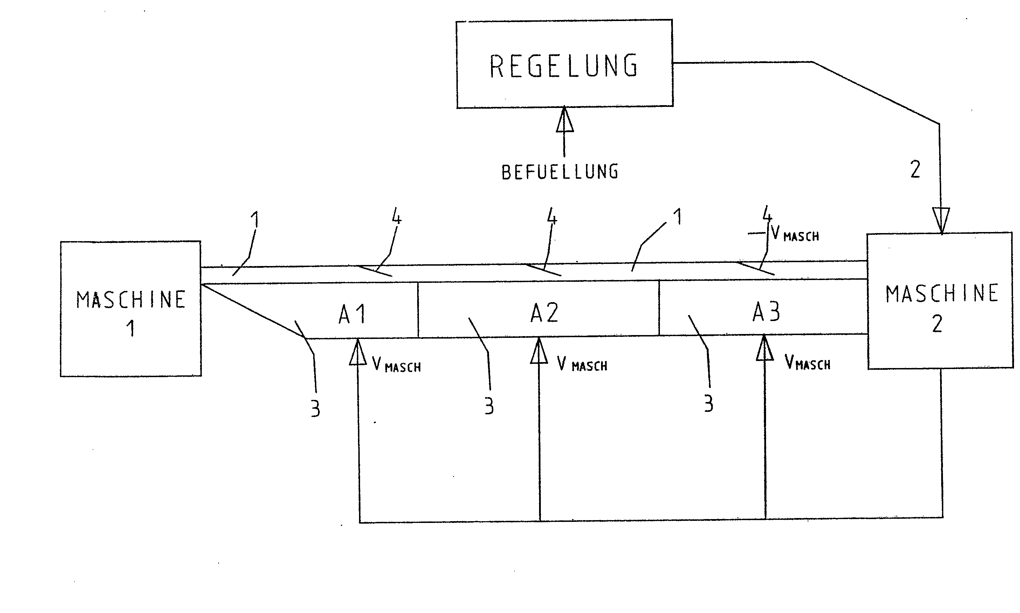

Im nachfolgenden wird die Erfindung anhand eines in
der Zeichnung dargestellten Ausführungsbeispiels näher
erläutert.

Das im Ausführungsbeispiel dargestellte Behandlungsaggregat befindet sich zwischen zwei Behandlungsmaschinen M 1 und M 2. Die Behandlungsmaschine M 1 kann
eine Reinigungsmaschine sein, von welcher die Flaschen
der nachfolgenden Maschine M 2, einer Füllmaschine,
gegebenenfalls unter Zwischenschaltung von nicht dargestellten Inspektionsmaschinen, zugeleitet werden.
Das Bereitstellungaggregat besteht aus einer vorzugsweise ein- oder mehrspurig durchgehenden Transportstrecke 1, die als Schnellspurförderer ausgebildet ist und vorzugsweise nur einen Antrieb 2 aufweist. Neben dieser Schnellspurstrecke befindet sich ein vorzugsweise aus mehreren einzelnen Transportbändern bestehender Speicherabschnitt 3, der einen eigenen Antrieb besitzt und gegebenenfalls gemäß der dargestellten Ausführung mehrere Unterabschnitte A 1 und A 2 und A 3 aufweisen kann, die dann ebenfalls in Abhängigkeit der gewünschten Pulklänge bzw. der vorgegebenen Durchsatzleistung der Behandlungsmaschine M 2 mit variabler Geschwindigkeit antreibbar sind. Sofern mehrere Speicherabshcnitte A 1 - A 3 vorgesehen sind, ist es zweckmäßig, in Höhe jeder Nahtstelle eines derartigen Speicherabschnittes je nach Besetzungsart dieser Abschnitte einschwenkbare Abweiselemente 4 vorzusehen, welche die mit erhöhter Transportgeschwindigkeit auf der Schnellspurstrecke 1 ankommenden Flaschen abdrängen und dem Pulkende mit geringer Differenzgeschwindigkeit nachführen.

Unter Voraussetzung einer ohne Störungen laufenden Maschine M 2 befindet sich auf dem Bereitstellungsaggregat eine ausreichende Menge von Flaschen, die dem vorwählbaren Pulkabschnitt bzw. der Pulkgröße als eigentliche Sicherheitsgröße entsprechen. Sobald nun durch Verminderung der Abgabeleistung der vorgeschalteten Maschine M 1 eine Verringerung des Reservepulks eintritt, kann anhand der Befüllung eine verminderte Durchsatzleistung der Maschine M 2 eingeregelt werden. Soll jedoch die Maschine M 2 mit der ihr vorgegebenen Durchsatzleistung weiter gefahren werden, so ist dies solange möglich, bis nur noch eine geringe Menge an Flaschen zur Verfügung steht. Je nach Größe und Vorwahl des Befüllungsgrades des Pulkabschnittes können auf diese Weise geringfügige Unterbrechungen der vorgeordneten Maschine M 1 aufgefangen werden. Sobald die vorgeordnete Maschine M 1 ihren Betrieb wieder aufnimmt, wird zunächst aufgrund des festgestellten geringen Pufferinhalts des Bereitstellungsaggregates die Schnellspurstrecke 1 mit der einregelbaren erhöhten Geschwindigkeit angetrieben, um im Bereich des Speicherabschnittes A 3 eine ausreichende Anzahl von Flaschen zur Verfügung zu stellen. Sobald dieser Abschnitt gefüllt ist, beginnt die Befüllung des nachfolgenden Abschnittes A 2 bzw. des noch zusätzlich eingegliederten Abschnittes A1. Dabei werden die jeweiligen Abschnitte mit einer Fördergeschwindigkeit angetrieben, die der jeweiligen Entnahmeleistung der Behandlungsmaschine M 2 angepaßt ist und bei welcher ein im wesentlichen staudruckloser Vorschub der Flaschen stattfindet. Die Speicherabschnitte A 1 - A 3 sind dabei in ihrer Fördergeschwindigkeit derart aufeinander abgestimmt, daß in allen Bereitstellungsphasen im wesentlichen Geschwindigkeitsverhältnisse $V_F$ (Flasche) = $V_B$ (Band) vorliegen.

0066720

Patentansprüche

1. Verfahren zum Bereitstellen von Flaschen oder dgl. für eine Flaschenbehandlungsanlage, dadurch gekennzeichnet, daß die Flaschen bei Nichtvorhandensein eines Pulks vor der eigentlichen Behandlungsmaschine mit hoher Geschwindigkeit im wesentlichen drucklos zugeführt, zur Bildung eines Pulkes mehrspurig aufgestaut und dieser Pulk auf eine der jeweiligen Entnahmeleistung der Behandlungsmaschine angepaßte Fördergeschwindigkeit eingestellt wird, wobei der jeweilige Pulk bzw. ein Bereich des Pulks mit einer der Befüll- und/oder Entnahmegeschwindigkeit angepaßten mittleren Geschwindigkeit bewegt wird, derart, daß in allen Bereitstellungsphasen Geschwindigkeitsverhältnisse $V_F$(Flasche) = $V_B$(Band) vorliegen.

2. Verfahren nach Anspruch 1, dadurch gekennzeichnet, daß zur Ermittlung der jeweiligen Aufholdurchsatzleistung die Summe aller im Pulk vor und/oder hinter der jeweiligen Behandlungsmaschine gepufferten Flaschen herangezogen wird.

3. Verfahren nach Anspruch 1, dadurch gekennzeichnet, daß die Flaschen bei Vorhandensein eines vorgegebenen Puffers bzw. Pulks diesem mit verminderter Leistung zugeführt werden.

0066720

4. Verfahren nach Anspruch 1, dadurch gekennzeichnet, daß die Zufuhrgeschwindigkeit der nachzuführenden Flaschen in Abhängigkeit von der Pulklänge vor und/oder hinter der Behandlungsmaschine einregelbar ist.

5. Bereitstellungsaggregat für Flaschenbehandlungsmaschinen zur Durchführung des Verfahrens nach den Ansprüchen 1 - 4, bestehend aus einer Anzahl nebeneinander befindlicher Transportbänder oder dgl., die mit oberhalb der Transportebene verlaufenden Abweiselementen ausgestattet sind und einen Antrieb aufweisen, dadurch gekennzeichnet, daß das Bereitstellungsaggregat aus einer durchgehenden Schnellspurstrecke (1) und mindestens einem daneben befindlichen, mit an die Abnahmeleistung der folgenden Behandlungsstation angepaßter Geschwindigkeit antreibbaren Speicherabschnitt (3) besteht, wobei dieser Abschnitt vorzugsweise nochmals in Transportrichtung ein- oder mehrmals unterteilt und die so gebildeten Abschnitte (A1 - A3) mit aufeinander abstimmbaren Geschwindigkeiten antreibbar sind und dabei im wesentlichen Geschwindigkeitsverhältnisse $V_F$(Flasche) = $V_B$(Band) vorliegen.

6. Bereitstellungsaggregat für Flaschenbehandlungsmaschinen nach Anspruch 5, dadurch gekennzeichnet, daß

- 3 -

0066720

die Schnellspurstrecke (1) in ihrer Transportgeschwindigkeit unabhängig von der Geschwindigkeit
des Speicherabschnittes (3) regelbar ist.

7. Bereitstellungsaggregat für Flaschenbehandlungsmaschinen nach Anspruch 5, dadurch gekennzeichnet,
daß die Schnellspurstrecke (1) entsprechend der
Anzahl der zugeordneten Speicherabschnitte (A1 -
A3) mit je nach Besetzungsart dieser Speicherabschnitte (A1 - A3) einlenkbaren Abweiselementen
(4) ausgestattet ist, derart, daß die auf der
Schnellspurstrecke (1) mit erhöhter Transportgeschwindigkeit bewegten Flaschen dem Pulkende mit
geringer Differenzgeschwindigkeit nachführbar
sind.

1/1

0066720

Europäisches
Patentamt

**EUROPÄISCHER RECHERCHENBERICHT**

0066720

Nummer der Anmeldung

EP 82 10 4024

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-A-2 504 264 (KRONSEDER) <br> * Seite 3, Zeile 6 - Seite 4, Zeile 16; Seite 5, Zeile 16 - Seite 9, Zeile 8; Figuren * <br><br> --- | 1,5 | B 65 G 47/51 <br> B 67 C 7/00 |
| A | FR-A-2 113 820 (TAYLOR) <br><br> --- | 1 | |
| A | DE-A-2 505 622 (BRYGGERIER) <br><br> --- | 1 | |
| A | GB-A-1 019 399 (HOLSTEIN) <br><br> ----- | 1 | |

**RECHERCHIERTE SACHGEBIETE (Int. Cl. ³)**

B 67 C
B 65 C

Der vorliegende Recherchenbericht wurde für alle Patentansprüche erstellt.

| Recherchenort <br> DEN HAAG | Abschlußdatum der Recherche <br> 17-09-1982 | Prüfer <br> VROMMAN L.E.S. |
|---|---|---|